## Europäisches Patentamt

(19) **European Patent Office**

**Office européen des brevets**

(11) Veröffentlichungsnummer: **0 030 694**
**B1**

(12) ## EUROPÄISCHE PATENTSCHRIFT

(45) Veröffentlichungstag der Patentschrift:
**20.03.85**

(51) Int. Cl.⁴: **F 16 N 29/02,** B 23 Q 11/12,
G 05 B 11/16

(21) Anmeldenummer: **80107704.1**

(22) Anmeldetag: **08.12.80**

(54) Automatisches Schmiersystem für Gleitlager und -führungen.

(30) Priorität: **17.12.79 US 104607**

(43) Veröffentlichungstag der Anmeldung:
**24.06.81 Patentblatt 81/25**

(45) Bekanntmachung des Hinweises auf die Patenterteilung:
**20.03.85 Patentblatt 85/12**

(84) Benannte Vertragsstaaten:
**DE FR GB**

(73) Patentinhaber: **International Business Machines
Corporation, Old Orchard Road, Armonk, N.Y. 10504 (US)**

(72) Erfinder: **Darrow, Berwin Winfield, 313 Doyleson Avenue,
Endwell New York 13760 (US)**
Erfinder: **Wilkinson, David Joseph, 336 Frey Avenue,
Vestal New York 13 850 (US)**

(74) Vertreter: **Willich, Wolfgang, Dipl.-Ing., Schönaicher
Strasse 220, D-7030 Böblingen (DE)**

(56) Entgegenhaltungen:
CH - A - 613 495
DE - A - 2 639 839
DE - A - 2 718 433
DE - B - 2 528 313
FR - A - 1 538 645
FR - A - 2 372 960
GB - A - 1 216 981
US - A - 3 463 268
US - A - 3 674 112
US - A - 3 856 114

Control & Instrumentation, Band 10, April 1978,
LONDON (GB), "Cams which are easily adjustable and
won't wear or slip", Seite 7

ACTORUM AG

## Beschreibung

Die Erfindung betrifft ein automatisches Schmiersystem für Gleitlager und -führungen, deren aufeinander gleitende Teile aus elektrisch leitendem Werkstoff bestehen.

Die automatische Schmierung derartiger Maschinenteile dient dem Schutz der Teile vor Verschleiss und Beschädigung sowie der Aufrechterhaltung einer kontinuierlichen Betriebsbereitschaft. Ausserdem wird der Personalaufwand für die Wartung der Maschine verringert. Die bekannten Systeme weisen jedoch hauptsächlich die beiden folgenden Nachteile auf: Wenn die Schmiermittelzufuhr in regelmässigen Abständen automatisch durchgeführt wird, erfolgt sie nicht in Anpassung an die tatsächlichen Erfordernisse in Abhängigkeit von der Betriebsart und dem Betriebszustand; andere Systeme, welche in Abhängigkeit vom jeweiligen Betriebszustand als Regelsystem arbeiten, weisen eine unbefriedigende Empfindlichkeit auf.

Zur ersten Gruppe gehört eine Einrichtung, wie sie in der US-A-3 856 114 beschrieben ist und bei der das Schmiermittel in festgelegten Abständen periodisch zugeführt wird; die Abstände für die Schmiermittelzufuhr werden in Abhängigkeit von der Betriebsart jeweils durch einen angeschlossenen Computer ermittelt. Diese Einrichtung ist somit nicht als Regelsystem gestaltet und reagiert daher auch nicht auf unvorhergesehene Betriebszustände, wie beispielsweise übermässige Erwärmung oder Ausfall der Schmiermittelpumpe.

Zur anderen Gruppe von Schmiersystemen, die als Regelsystem arbeiten, gehört beispielsweise die Anordnung nach der US-A-3 674 112, bei der die jeweilige Temperatur einer Lagerfläche gemessen und bei Überschreiten einer festgelegten Grenztemperatur Schmiermittel in dosierter Menge oder für eine vorgegebene Zeit zugeführt wird. Eine andere Ausführung mit ständiger Abtastung der jeweiligen Betriebsverhältnisse ist in US-A-3 463 268 beschrieben: hier wird die erforderliche Antriebsleistung, z.B. für einen Kettenantrieb, gemessen, und bei einem Anstieg der effektiven Motorleistung infolge erhöhter Reibung der aneinandergleitenden Teile wird die Zufuhr von Schmiermittel ausgelöst. Diese beiden Einrichtungen haben den Nachteil, dass sie die genannten Parameter nicht unterscheiden können und somit durch Störeinflüsse, wie Änderungen der Umgebungstemperatur bzw. der Belastung der aneinandergleitenden Maschinenteile verfälscht werden, so dass das Regelsystem durch Störsignale beeinflusst wird.

Aus DE-A-2 639 839 ist weiterhin ein automatisches Schmiersystem für Gleitlager und -führungen, z.B. Kolben und Zylinder einer Brennkraftmaschine, bekannt, bei dem die aufeinandergleitenden Teile aus elektrisch leitendem Werkstoff bestehen und in Reihe in einen elektrischen Stromkreis geschaltet sind, wobei der jeweilige elektrische Widerstand des Schmierfilms zwischen den aufeinandergleitenden Teilen gemessen wird. Dabei gibt der Stromkreis in Abhängigkeit von dem jeweiligen Schmierfilmzustand zwischen den gleitenden Teilen und dem daraus resultierenden Stromdurchfluss Ausgangssignale ab von denen Betätigungssignale für ein Steuersystem für die Schmiermittelzufuhr abgeleitet werden können. Bei dieser bekannten Ausführung werden die jeweils gemessenen Widerstandswerte des Schmierfilms ggf. unmittelbar zur Steuerung der Schmierfilmzufuhr verwertet, ohne dass hierbei irgendwelche Schwellwerte berücksichtigt sind, so dass diese Anordnung zu einem instabilen Verhalten neigt und eine Regelung der Schmiermittelzufuhr nur sehr unstet und unzuverlässig erreichbar ist.

Der Erfindung liegt die Aufgabe zugrunde, ein automatisches Schmiersystem dieser Gattung zu schaffen, das durch die Integration der gemessenen, durch den Schmierfilm gebildeten Widerstandswerte eine verbesserte Ansprechcharakteristik aufweist sowie eine einfache Möglichkeit zur Einflussnahme auf die Wirkungsweise bietet, indem eine Referenzspannung vorgegeben werden kann. Diese Aufgabe ist durch das im Patentanspruch 1 angegebene System gelöst worden. Ein taktgesteuertes Zweipunktregelsystem mit einer RC-Kombination für die kontinuierliche Überwachung anliegender Strom- bzw. Spannungswerte anhand einer Referenzspannung ist als solche durch GB-A-1 216 981 bekannt. Mit der erfindungsgemässen Anordnung wird unter Verwendung dieses grundsätzlichen Regleraufbaus ein optimales Regelverhalten für die Bildung und Aufrechterhaltung eines ausreichenden Schmierfilms zwischen aufeinandergleitenden Teilen erreicht.

Ein Vorteil des erfindungsgemässen Schmiersystems liegt unter anderem darin, dass die Auswahl des jeweils geeignetsten Schmiermittels erleichtert wird, denn die Messung des Widerstandes beim Durchfluss von Strom durch die aufeinander gleitenden Teile ermöglicht nicht nur eine Aussage über eine ausreichende Schmiermittelmenge, sondern auch über die geeignete Zusammensetzung und Viskosität des jeweils verwendeten Schmiermittels.

Weiter zweckmässige Ausgestaltungen der Erfindung sind in den abhängigen Patentansprüchen gekennzeichnet.

Die Erfindung wird im folgenden anhand der Zeichnungen in einigen Ausführungsbeispielen erläutert.

Es zeigen:

Fig. 1 eine schematische Darstellung eines automatischen Schmiersystems für eine Schlittenführung,

Fig. 2 ein Diagramm zur Darstellung verschiedener Kennwerte des Schmiersystems gemäss Fig. 1 im Verlauf der Schlittenbewegungen,

Fig. 3 eine schematische Darstellung einer Erweiterung der elektrischen Schaltung des Schmiersystems gemäss Fig. 1 und

Fig. 4 eine schematische Darstellung einer weiteren Alternativausführung für die elektrische Schaltung unter Verwendung eines Mikroprozessors.

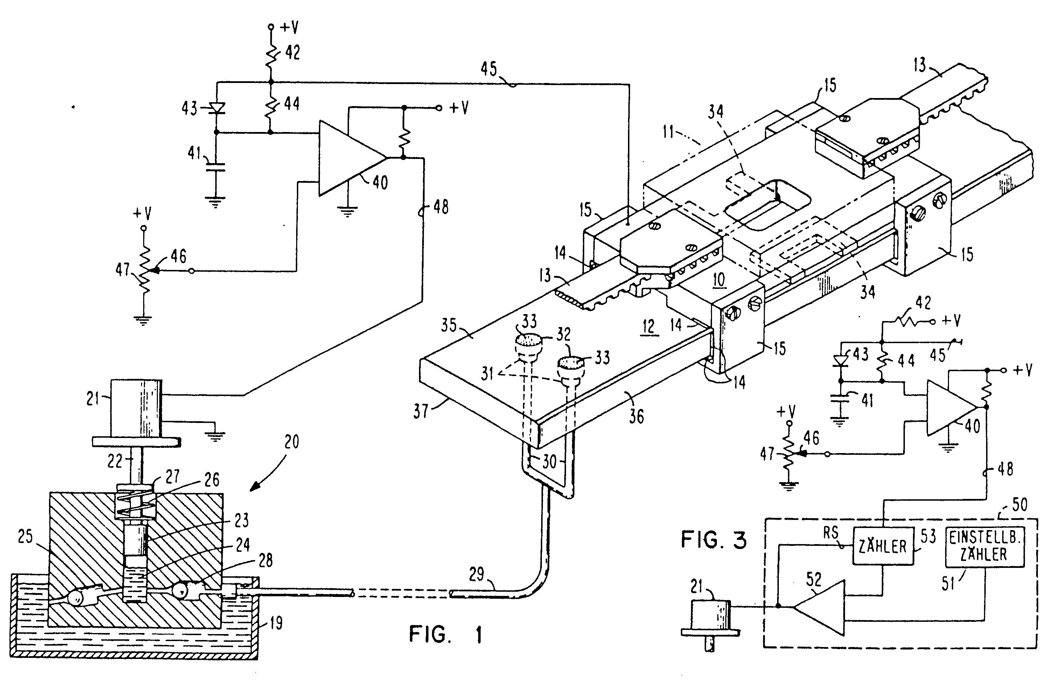

In Fig. 1 ist eine Gleitführungsanordnung dargestellt, in der ein Schlitten 10 eine mit 11 bezeichnete, strichpunktiert dargestellte Last trägt und längs einer Führungsschiene 12 hin und her bewegt wird. Der Reversierantrieb für den Schlitten 10 kann aus einem (nicht gezeigten) Motor bestehen, welcher über einen Zahnriemen 13 mit dem Schlitten 10 verbunden ist. An den Aussenseiten des Schlittens 10 befinden sich Führungswinkel 15, und zur Führung des Schlittens 10 auf der Führungsschiene 12 dienen Lagerflächen 14 an der Unterseite des Schlittens 10 sowie an den Innenseiten der Führungswinkel 15. Der Schlitten 10, die Führungsschiene 12 und die Lagerflächen 14 bestehen aus elektrisch leitendem Werkstoff, üblicherweise Stahl oder Bronze, und zwischen den Lagerflächen 14 und den entsprechenden Bereichen der Oberfläche der Führungsschiene 12 wird ein Schmierfilm aufrechterhalten.

Das erforderliche Schmiermittel, z.B. Öl, wird der Führungsschiene 12 durch eine in einem Vorratsbehälter 19 angeordnete Kolbenpumpe 20 zugeführt. Die Kolbenpumpe 20 besteht aus einer Magnetspule 21 und einer Kolbenstange 22 mit einem Kolben 23, der in einem Zylinder 24 auf und ab bewegt wird. Diese Bewegung bewirkt in üblicher Weise die Zufuhr von Öl durch ein Eingangsventil 25, sooft der mittels der Magnetspule 21 abwärts bewegte Kolben 23 anschliessend unter der Wirkung einer gegen einen Bund 27 der Kolbenstange 22 wirksamen Feder 26 aufwärts bewegt wird. Bei der anschliessenden erneuten Abwärtsbewegung des Kolbens 23 wird das zuvor durch das Eingangsventil 25 angesaugte Öl durch ein Ausgangsventil 28 in eine Leitung 29 gepumpt, aus der es sich in zwei parallele Leitungen 30 verzweigt.

Die Leitungen 30 führen zu je einer zugeordneten Bohrung 31 in der Führungsschiene 12, die mit Öffnungen 32 verbunden sind, in denen sich dochtartige Kissen 33 befinden, die mit dem zugeführten Schmieröl getränkt werden. In Ausschnitten an der Unterseite der Führungsschiene 12 befindet sich ein weiteres Paar U-förmiger, dochtartiger Kissen 34, wie in Fig. 1 gestrichelt dargestellt. Die Ausrichtung der Kissen 33 in der Oberfläche der Führungsschiene 12 und der Kissen 34 in der Unterseite des Schlittens 10 ist so gewählt, dass bei jeder Bewegung des Schlittens 10 die Kissen 34 erneut mit Schmieröl von den Kissen 33 getränkt werden. Der so auf den einander zugewandten Flächen des Schlittens 10 und der Führungsschiene 12 aufrechterhaltene Ölfilm verteilt sich infolgedessen auch auf die Aussenflächen 36 und die untere Fläche 37 der Führungsschiene 12.

Die Steuerschaltung für die Kolbenpumpe 20 besteht aus einer Vergleicherschaltung 40, der ein Eingangssignal und eine bestimmte Referenzspannung zugeführt werden. Das Eingangssignal gelangt über eine RC-Schaltung zur Vergleicherschaltung 40, bestehend aus einem Kondensator 41 an Masse sowie einem Widerstand 42 und einer Diode 43, die an eine Spannungsquelle angeschlossen sind. Ein Widerstand 44 bildet einen Entladungsweg und bestimmt die Entladungsgrösse des Kondensators 41 durch eine Verknüpfung zwischen den Widerständen 42 und 44 im Verlauf einer Leitung 45 zum Schlitten 10, der über die Führungsschiene 12 an Erde liegt. Die Referenzspannung für die Vergleicherschaltung 40 wird mittels eines Schleifers 46 von einem regelbaren Widerstand 47 abgeleitet, welcher zwischen einer Spannungsquelle und Erde liegt.

Im Betrieb der beschriebenen Anlage wird der Kondensator 41 über den Widerstand 42 und die Diode 43 aufgeladen und auf einer genügend hohen Spannung im Verhältnis zur Referenzspannung am Schleifer 46 gehalten, um die Abgabe eines Ausgangssignals von der Vergleicherschaltung 40 zu verhindern. Angenommen, zwischen dem Schlitten 10 und der Führungsschiene 12 befindet sich ein ausreichender Ölfilm, so gelangt wegen der hohen Impedanz des Ölfilms zwischen dem Gleitflächenpaar und dessen Verknüpfung in bezug auf den Widerstand 42 nur eine geringe Strommenge vom Kondensator 41 über den Widerstand 44 und die Leitung 45 zu Erde.

Wenn nun der Schlitten 10 mit seinen Lagerflächen 14 auf den Flächen der Führungsschiene 12 hin und her gleitet, wird der vorhandene Ölfilm allmählich dünner, so dass gelegentlich ein unmittelbarer physischer Kontakt zwischen den aneinandergleitenden Metallteilen entsteht, mit der Folge einer entsprechend verringerten Impedanz in dem Weg von den Widerständen 42 und 44 über die Leitung 45 zu Erde und einer entsprechenden elektrischen Entladung des Kondensators 41. Bei dessen hinreichender Entladung in bezug auf die Referenzspannung fällt das Eingangssignal zwischen dem Kondensator 41 und dem Widerstand 44 unter die zugeführte Bezugsspannung und veranlasst die Abgabe eines Ausgangssignals von der Vergleicherschaltung 40 über die Leitung 48 zu Magnetspule 21. Dadurch wird in der oben beschriebenen Weise Öl durch die Leitung 29 gepumpt, so dass die Kissen 33 in der Führungsschiene 12 neu mit Öl getränkt werden. Durch die Auswahl bestimmter Referenzspannungswerte für die Kondensatorentladungsschaltung kann die Empfindlichkeit der Vergleicherschaltung 40 den Erfordernissen der zu schmierenden Gleitführung angepasst werden.

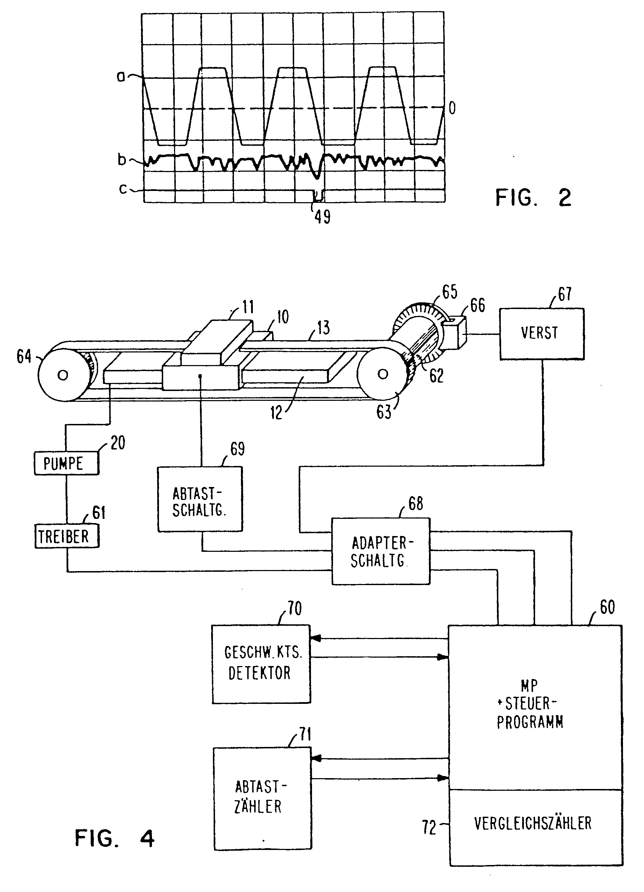

Ein Abreissen des Ölfilms tritt erfahrungsgemäss am häufigsten in den Bereichen der Umkehrung der Schlittenbewegung auf, wenn diese verzögert und wieder beschleunigt wird. Dies ist anhand der Kondensatoraufladung in Abhängigkeit von der Schlittenbewegung in dem Diagramm nach Fig. 2 dargestellt. Die Wellenlinie a bezeichnet die Bewegungszyklen des Schlittens 10, die mit 0 gekennzeichnete gestrichelte Linie zeigt jeweils das Ende der Schlittenbewegung, also den Umkehrpunkt. Die mit b bezeichnete Kurve zeigt den jeweiligen Ladungszustand des Kondensators 41 an, und die Ausgangsignale der Vergleicherschaltung 40 sind durch die Linie c dargestellt, wobei am Punkt 49 ein Betätigungssignal zum Einschalten der Kolbenpumpe 20 abgegeben wird.

Da die direkte Übertragung des Ausgangssignals von der Vergleicherschaltung 40 zur Kolbenpumpe 20 (Fig. 1) zum Zwecke der Betätigung der Magnetspule 21, wenn die Pumpe bei jedem einzelnen Ausgangssignal eingeschaltet wird, die Zufuhr von zu viel Schmiermittel bewirken kann, ist es zweckmässig, die Steuerschaltung modifiziert auszugestalten. Eine derartige Modifikation mit Zwischenschaltung eines Steuerzählers zwischen dem Vergleicherausgang und der Magnetspule 21 der Pumpe 20 ist in Fig. 3 dargestellt.

Gemäss Fig. 3 ist ein Steuerzähler 50 zwischen der Ausgangsleitung 48 der Vergleicherschaltung 40 und der Magnetspule 21 geschaltet. Der Steuerzähler 50 enthält einen einstellbaren Zähler 51, der ein Eingangssignal zu einer Vergleicherschaltung 52 liefert, und einen Zähler 53, welcher durch die auf der Leitung 48 ankommenden Signale fortgeschaltet wird und dessen Ausgangssignale der Vergleicherschaltung 52 als zweites Eingangssignal zugeführt werden. Wenn die Zählerstände des Zählers 51 und des Zählers 53 gleich sind, gibt die Vergleicherschaltung 52 ein Betätigungssignal an die Magnespule 21 der Ölpumpe ab. Dieses Signal wird gleichzeitig zur Rückstellung des Zählers 53 über die Leitung RS benutzt. Somit reagiert die Schaltungsanordnung nach Fig. 3 jeweils erst auf eine bestimmte Anzahl von Unterbrechungen des Ölfilms, wie sie von der Vergleicherschaltung 40 einzeln festgestellt werden, bleibt jedoch unabhängig von der Zahl der Reversierbewegungen des Schlittens 10. Ist der Ölfilm unzureichend, wird daher die Schmierung erneuert, während bei hinreichendem Schmierfilm der Zähler 53 entsprechend langsamer weitergeschaltet wird und den Stand des einstellbaren Zählers 51 erst entsprechend später erreicht.

In einer weiteren Alternativausführung der Steuerschaltung, wie sie in Fig. 4 gezeigt ist, dient ein Mikroprozessor 60 mit Steuerprogramm über einen Treiber 61 als Betätigungseinrichtung für die Pumpe 20. Bei dieser Ausführung wird der Schlitten 10, welcher, wie in Fig. 1, auf einer Führungsschiene gleitend gelagert ist, von einem Motor 62 über eine Riemenscheibe 63 und den Zahnriemen 13 angetrieben, der am entgegengesetzten Ende über eine Spannrolle 64 geführt ist. Mit dem Motor 62 ist eine Emitterscheibe 65 gekuppelt, die in üblicher Ausführung als transparente Scheibe mit aufgezeichneten Marken ausgeführt ist und durch einen Photoabtaster 66 mit einer Lichtquelle und einem Phototransistor abgetastet wird. Die Ausgangssignale des Phototransistors werden in einer Verstärkerschaltung 67 verstärkt und einer Adapterschaltung 68 zugeführt, welche somit für jede Bewegungseinheit des Motors 62 und des Schlittens 10 ein Signal erhält.

In Fig. 4 ist die in Fig. 1 gezeigte Schaltung als Abtastschaltung 69 vereinfacht dargestellt. Die Ausgangsleitung der Abtastschaltung 69 führt zu einer Adapterschaltung 68, und der Treiber 61 für die Pumpe 20 ist gleichfalls mit der Adapterschaltung 68 verbunden, die ihrerseits an den Mikroprozessor 60 mit Steuerprogramm angeschlossen ist. Der Mikroprozessor 60 steuert die Ausgangssignale von der Abtastschaltung 69 in bezug auf die Bewegungsgeschwindigkeit des Schlittens 10, die durch die Impulse vom Verstärker 67 dargestellt werden. Die entsprechenden Signale werden einem Geschwindigkeitsdetektor 70 zugeführt, welcher dem Mikroprozessor 60 anzeigt, wenn die Bewegungsgeschwindigkeit des Schlittens 10 einen vorgegebenen Wert überschreitet und eine erhöhte Zufuhr von Schmiermittel erforderlich ist. Denn die Schmierfilmdicke und das Auftreten eines entsprechenden mechanischen Verschleisses sind massgeblich abhängig von der Belastung und der Relativgeschwindigkeit der Gleitflächen. Bei Erreichen einer bestimmten Gleitgeschwindigkeit kann ein unverhältnismässig hoher Verschleiss auftreten, so dass, wenn diese Geschwindigkeit festgestellt wird, eine besondere Überwachung der Schmierung wünschenswert ist. Eine derartige Überwachung wird durch den Geschwindigkeitsdetektor 70 erreicht.

In einer bestimmten Betriebsweise werden die Emittersignale dem Mikroprozessor 60 zugeführt, der sie zum Geschwindigkeitsdetektor 70 leitet, welcher gleichzeitig vom Mikroprozessor 60 interne Zeitsignale erhält. Der Geschwindigkeitsdetektor 70 bestimmt aufgrund dieser Signale die Anzahl der Zeitsignale zwischen aufeinanderfolgenden Emittersignalen und zeigt dem Mikroprozessor 60 an, ob der Schlitten 10 die zuvor eingegebene vorbestimmte Geschwindigkeit erreicht hat. Anschliessend fragt der Mikroprozessor 60 die Abtastschaltung 69 ab, und wenn deren Ausgangssignal anzeigt, dass eine erneute Schmiermittelzufuhr notwendig ist (wie im Zusammenhang mit Fig. 1 beschrieben), wird durch die Adapterschaltung 68 und über den Treiber 61 ein Betätigungssignal zur Pumpe 20 gesendet.

Eine weitere Möglichkeit besteht darin, dass der Mikroprozessor 60 die Ausgangssignale der Abtastschaltung 69 in der Weise verarbeitet, dass er vom Erreichen einer vorgegebenen Geschwindigkeit ab in regelmässigen Zeitabständen Betätigungsimpulse über den Treiber 61 zur Pumpe 20 sendet. Bei diesem Verfahren unterbricht der Mikroprozessor 60 die Überwachung der Abtastschaltung 69, sobald der Geschwindigkeitsdetektor 70 die vorgegebene Geschwindigkeit anzeigt und eine vorbestimmte Anzahl von Emitterimpulsen angekommen ist. Nun wird ein Abtastzähler 71 eingeschaltet, welcher die laufende algebraische Summe der Ausgangssignale von der Abtastschaltung 69 festhält, die ihrerseits vom Mikroprozessor 60 abgefragt wird.

Zeigt beispielsweise die Abtastschaltung 69 eine ausreichende Schmierung an, wird eine «1» im Abtastzähler 71 subtrahiert. Zeigt andererseits die Abtastschaltung 69 an, dass der Schmierfilm nicht mehr ausreichend und die Kondensatorladung entsprechend abgesunken ist, so wird eine «1» im Abtastzähler 71 addiert. Der resultierende Zählerstand wird nun mit dem Stand in einem voreingestellten Vergleichszähler 72 verglichen. Angenommen, der Vergleichszähler 72 sei auf +100 eingestellt, so gibt dieser ein Signal an den Mikroprozessor 60 ab, sobald der akkumulierte Wert im Abtastzähler 71 diesen Wert erreicht. Daraufhin betätigt der Mikroprozessor 60 über den Treiber 61 die Pumpe 20 auf dem Wege über die Adapterschaltung 68. Selbstverständlich können für den Vergleichszähler 72 positive oder negative Zahlen verwendet werden.

**Patentansprüche**

1. Automatisches Schmiersystem für Gleitlager und -führungen, deren aufeinandergleitende Teile (10, 12) aus elektrisch leitendem Werkstoff bestehen und in Reihe in einen elektrischen Stromkreis (40 bis 48) geschaltet sind, wobei der jeweilige elektrische Widerstand des Schmierfilms zwischen den aufeinander gleitenden Teilen gemessen wird und der Stromkreis in Abhängigkeit von dem jeweiligen Schmierfilmzustand zwischen den gleitenden Teilen und dem daraus resultierenden Stromdurchfluss Ausgangssignale abgibt, von denen Betätigungssignale für ein Steuersystem für die Schmiermittelzufuhr (20 bis 33) ableitbar sind, dadurch gekennzeichnet, dass der elektrische Stromkreis eine Brückenschaltung (42, 45, 47), ein als Taktgenerator wirksames RC-Glied (41, 43, 44) und eine Vergleicherschaltung (40) aufweist, wobei die Brückenschaltung einerseits einen Widerstand (42) plus dem durch den Schmierfilm jeweils gebildeten Widerstand und andererseits einen einstellbaren, eine Referenzspannung liefernden Widerstand (47) aufweist, und wobei die Vergleicherschaltung (40) bei Überschreiten der Differenz zwischen Kondensatorspannung und Referenzspannung bis zum Abfall der Kondensatorspannung unter die Referenzspannung ein Betätigungssignal für die Schmiermittelzufuhr (20 bis 33) liefert.

2. Schmiersystem nach Anspruch 1, dadurch gekennzeichnet, dass dem elektrischen Stromkreis (40 bis 48) eine Zählerschaltung (50) nachgeschaltet ist, bestehend aus einem die Ausgangssignale akkumulierenden Zähler (53), einem einstellbaren Zähler (51) und einer nachgeschalteten zweiten Vergleicherschaltung (52).

3. Schmiersystem nach Anspruch 1, dadurch gekennzeichnet, dass der elektrische Stromkreis (40 bis 48) die Relativbewegungsgeschwindigkeit der aufeinander gleitenden Teile (10, 12) abtastende Mittel (65 bis 67) aufweist, deren Ausgangssignale bei Erreichen vorgegebener Geschwindigkeitswerte für die Auslösung von Betätigungssignalen für die Schmiermittelzufuhr (20 bis 33) berücksichtigt werden.

4. Schmiersystem nach Anspruch 3, dadurch gekennzeichnet, dass eine mit dem Antrieb (62 bis 64) des bewegten gleitenden Teils (10) verbundene Emitterscheibe (65) mit Photoabtaster (66) angeordnet ist, dessen Ausgangssignale mit Referenzzeitsignalen verglichen werden.

5. Schmiersystem nach den Ansprüchen 3 oder 4, dadurch gekennzeichnet, dass der elektrische Stromkreis (40 bis 48) eine vor- und rückwärtszählende Zählschaltung (71) aufweist, welcher von der Schmierfilm-Abtastschaltung (40 bis 48; 69) positive und negative Zählsignale erhält und bei Erreichen des Standes eines voreingestellten Vergleichszählers (72) Betätigungssignale für die Schmiermittelzufuhr (20 bis 33) auslöst.

**Claims**

1. Automatic lubricating system for sliding bearings and guides, whose sliding parts (10, 12) consist of electrically conductive material and are arranged in series in an electric circuit (40 to 48), the respective electric resistance of the lubricating film between the parts sliding upon each other being measured and the circuit, depending on the respective lubricant state between the sliding parts and the resulting current flux, supplying output signals from which operating signals can be derived for a control system for the lubricant supply (20 to 33), characterized in that the electric circuit comprises a bridge circuit (42, 45, 47), an RC unit (41, 43, 44) acting as a clock generator, and a comparator circuit (40), the bridge circuit comprising on the one hand a resistor (42) plus the resistance respectively formed by the lubricating film, and on the other hand an adjustable resistor (47) which supplies a reference voltage, and where the comparator circuit (40), upon the exceeding of the difference between copacitor voltage and reference voltage, up to the drop of the capacitor voltage beneath the reference voltage, supplies an operating signal for the lubricant supply (20 to 32).

2. Lubricating system as claimed in claim 1, characterized in that arranged at the outlet side of the electric circuit (40 to 48) a counter circuit (50) is arranged consisting of a counter (53) accumulating the output signals, an adjustable counter (51) and a series-arranged second comparing circuit (52).

3. Lubricating system as claimed in claim 1, characterized in that the electric circuit (40 to 48) comprises means (65 to 67) scanning the relative movement speed of the parts (10, 12) sliding upon each other, the output signals of said means being used upon reaching predetermined speeds for the releasing of operating signals for the lubricant supply (20 to 33).

4. Lubricating system as claimed in claim 3, characterized in that an emitter disk (65) connected to the drive (62 to 64) of the moving sliding part (10) is arranged with pickup device (66) whose output signals are compared with reference time signals.

5. Lubricating system as claimed in claim 3 or 4, characterized in that the electric circuit (40 to 48) comprises an up/down counter (71) receiving from the lubricant scanning circuit (40 to 48, 69) positive and negative count signals, and releasing upon reaching the state of a pre-set comparator counter (72) activating signals for the lubricant supply (20 to 33).

**Revendications**

1. Système automatique de lubrification pour paliers à glissement et glissières, dont les pièces (10, 12) glissant les unes sur les autres sont constituées en un matériau électriquement conducteur et sont branchées en série dans un circuit électrique (40, 48), et dans lequel la résistance électrique respective de la pellicule de lubrifiant est mesurée entres les pièces glissant les unes sur les autres et le circuit délivre, en fonction de l'état respectif de la pellicule de lubrifiant entre les pièces en glissement et en fonction du passage de courant en résultant, des signaux de sortie à partir desquels peuvent être dérivés des signaux d'actionnement pour un système de commande de l'amenée du lubrifiant (20 à 33), caractérisé en ce que le circuit électrique comporte un circuit en pont (42, 45, 47), un circuit RC (41, 43, 44) agissant en tant que générateur de cadence et un circuit comparateur (40), le circuit en pont possédant d'une part une résistance (42) plus la résistance respectivement formée par la pellicule de lubrifiant et d'autre part une résistance réglable (47) fournissant une tension de référence, et le circuit comparateur (40) délivrant, lors du dépassement de la différence entre la tension du condensateur et la tension de référence jusqu'à la chute de la tension du condensateur au-dessous de la tension de référence, un signal d'actionnement pour l'envoi du lubrifiant (20 à 32).

2. Système de lubrification suivant la revendication 1, caractérisé en ce qu'en aval du circuit électrique (40 à 48) est branché un circuit de comptage (50) constitué par un compteur (53) cumulant les signaux de sortie, un compteur réglable (51) et un second circuit comparateur (52) branché en aval.

3. Système de lubrification selon la revendication 1, caractérisé en ce que le circuit électrique (40 à 48) comporte des moyens (65 à 67) explorant la vitesse de déplacement relatif des pièces (10, 12) glissant l'une sur l'autre et dont les signaux de sortie sont pris en compte pour le déclenchement de signaux d'actionnement pour l'envoi de lubrifiant (20 à 30), lorsque des valeurs prédéterminées de vitesse sont atteintes.

4. Système de lubrification selon la revendication 3, caractérisé en ce qu'il est prévu un disque émetteur (65) relié au dispositif d'entraînement (62 à 64) de la partie coulissante mobile (10) et comportant un photodétecteur (66) dont les signaux de sortie sont comparés à des signaux temporels de référence.

5. Système de lubrification selon les revendications 3 ou 4, caractérisé en ce que le circuit électrique (40 à 48) comporte un circuit de comptage (71) effectuant un comptage progressif et un comptage régressif et qui reçoit des signaux de comptage positifs et négatifs de la part du circuit (40 à 48; 69) d'exploration de la pellicule de lubrifiant et déclenche des signaux d'actionnement pour l'envoi de lubrifiant (20 à 33) lorsque l'état d'un compteur de comparaison (72) préréglé est atteint.

FIG. 1

FIG. 3

FIG. 2

FIG. 4